Europäisches Patentamt

European Patent Office

Office européen des brevets

(11) Veröffentlichungsnummer: **0 083 431**
**B1**

(12) # EUROPÄISCHE PATENTSCHRIFT

(45) Veröffentlichungstag der Patentschrift:
12.03.86

(21) Anmeldenummer: 82111606.8

(22) Anmeldetag: 14.12.82

(51) Int. Cl.⁴: **G 01 V 9/04**, G 08 B 13/18,
G 02 B 3/00

(54) **Reflexlichtschranke mit erweitertem Funktionsbereich.**

(30) Priorität: 22.12.81 CH 8197/81

(43) Veröffentlichungstag der Anmeldung:
13.07.83 Patentblatt 83/28

(45) Bekanntmachung des Hinweises auf die Patenterteilung:
12.03.86 Patentblatt 86/11

(84) Benannte Vertragsstaaten:
AT CH DE FR GB IT LI

(56) Entgegenhaltungen:
DE - A - 2 127 013
DE - A - 2 836 331
DE - A - 2 921 110
FR - A - 1 324 570
US - A - 2 759 393

PATENTS ABSTRACTS OF JAPAN, Band 6, Nr.
30(P-103)(908), 23. Februar 1982

(73) Patentinhaber: ELESTA AG ELEKTRONIK, CH-7310 Bad
Ragaz (CH)

(72) Erfinder: Reiner, Eugen, Feld, CH-7324 Vilters (CH)

(74) Vertreter: Riederer, Conrad A., Dr., Bahnhofstrasse 10,
CH-7310 Bad Ragaz (CH)

ACTORUM AG

## Beschreibung

Die Erfindung betrifft eine Relexlichtschranke mit einer Lichtquellenanordnung und optischen Elementen zur Erzeugung zweier entlang getrennter optischer Achsen gerichteter Strahlenbündel, sowie mit einem Fotodetektor zum Empfang von an einem reflektierenden Gegenstand zurückgeworfenen Licht, wobei die Achse des einen Strahlenbündels im wesentlichen parallel zur Empfangsrichtung des Fotodetektors verläuft.

Bei einer bekannten Reflexlichtschranke sind in einem Gehäuse Lichtsender und Lichtempfänger in einem Abstand von etwa 8 mm angeordnet. Der Lichtsender besteht im wesentlichen aus einer Lichtquelle, z.B. einer Licht emittierenden Diode, und einer Linse zur Bündelung des Lichts zu einem Lichtstrahl. In analoger Weise besteht der Lichtempfänger aus einem lichtempfindlichen Element, z.B. einer Fotodiode, und einer Linse, welche das auf den Lichtempfänger auffallende Licht fokussiert. Die Achsen von Lichtsender und Lichtempfänger sind parallel zueinander angeordnet. Da das vom Lichtsender ausgehende Licht etwas divergiert und auch das vom festzustellenden retroreflektierenden Gegenstand (Reflektor) zurückgeworfene Licht etwas gestreut wird, kann die Lichtschranke auf Reflektoren ansprechen, obwohl ein Abstand zwischen den otpischen Achsen der Lichtquelle und des Lichtempfängers besteht. Zum sicheren Ansprechen ist allerdings erforderlich, dass sich der festzustellende Reflektor nicht zu weit (Grenze des Fernbereiches) und nicht zu nahe (Grenze des Nahbereiches) bei der Lichtschranke befindet und eine Mindestmenge an Licht reflektiert.

Bekannte Reflexlichtschranken werden vielfach mit zwei verschiedenen Linsensystemen gefertigt, wobei das eine Linsensystem zur Feststellung relativ entfernter Reflektoren dient und das andere Linsensystem zur Feststellung relativ naher Reflektoren. Zur Feststellung relativ ferner Reflektoren liefert der Lichtsender einen Strahl, der relativ wenig divergiert und somit auf einem entfernten Reflektor einen relativ kleinen Lichtfleck von grosser Lichtintensität erzeugt. Demgegenüber wird zur Feststellung eines relativ nahen Reflektors beim Lichtsender eine Linse verwendet, die relativ stark streut. Auf einem fernen Reflektor würde daher ein relativ grosser Lichtfleck von geringer Lichtintensität erzeugt, so dass die Reflexlichtschranke auf diesen Lichtfleck nicht mehr ansprechen würde. Auf einem relativ nahen Reflektor besitzt der Lichtfleck eine genügende Intensität, ist aber auch gross genug, um vom Lichtempfänger erfasst zu werden. Die bekannte Lichtschranke hat also den Nachteil, dass sie zwei verschiedene Linsensysteme braucht, je nachdem, ob sie zur Feststellung von relativ entfernt gelegenen oder relativ nahe gelegenen Reflektoren verwendet wird. Dabei ist weiter nachteilig, dass sie nicht gleichzeitig zur Feststellung entfernt und nahe gelegener Reflektoren verwendbar ist. Ist beides notwendig, so müssen zwei Reflexlichtschranken verwendet werden.

In der DE-A-2921110 ist ferner eine eine Lichtquellenanordnung und einen Fotodetektor aufweisende Vorrichtung beschrieben, welche mit einem zum Strahlengang der Lichtquelle geneigt angeordneten, in dessen Strahlenbündel eintauchenden teildurchlässigen Spiegel ausgerüstet ist, welcher auf den Fotodetektor reflektiert. Dieser Anordnung ist entweder eine weitere Lichtquelle oder ein weiterer Fotodetektor ausserhalb des Erstreckungsbereichs des teildurchlässigen Spiegels zugeordnet. Durch diesen Aufbau wird erreicht, dass die Vorrichtung sowohl auf Reflektoren im Nahbereich als auch auf Reflektoren im Fernbereich anspricht. Sind also beispielsweise in der Vorrichtung eine Lichtquellenanordnung und zwei Fotodetektoren vorgesehen, so wird von einem Reflektor im Nahbereich relativ viel Licht über den teildurchlässigen Spiegel zum einen Fotodetektor zurückgestrahlt, währenddem auf den anderen Fotodetektor kein oder praktisch kein Licht fällt. Ist jedoch der Reflektor im Fernbereich, so fällt das zurückgestrahlte Licht auch auf den anderen Fotodetektor. Dabei ist zu beachten, dass diesmal der Lichteinfall nicht durch den teildurchlässigen Spiegel begrenzt wird. Infolgedessen weist der Lichteinfall aus dem Fernbereich eine ausreichende Intensität auf, um eine Schaltung der Lichtschranke zu bewirken.

Die bekannte Anordnung hat jedoch den Nachteil, dass sie im Gegensatz zu einer üblichen Lichtschranke einen zusätzlichen Spiegel und eine zusätzliche Lichtquellenanordnung oder einen zusätzlichen Fotodetektor benötigt.

Es ist daher Aufgabe der vorliegenden Erfindung, eine Reflexlichtschranke der eingangs erwähnten Art so zu verbessern, dass sie ohne zusätzliche Spiegelanordnung und ohne zusätzliche Lichtquellenanordnung oder Fotodetektor ebenfalls für den Nah- als auch den Fernbereich einsetzbar ist. Gemäss der Erfindung wird dies dadurch erreicht, dass die optischen Elemente so ausgebildet und angeordnet sind, dass die Achse des anderen Strahlenbündels mit der des einen Strahlenbündels einen spitzen Winkel einschliesst. Dies hat den Vorteil, dass mit einfachen Mitteln erreicht wird, dass sowohl relativ fern gelegene als auch relativ nahe gelegene Reflektoren festgestellt werden können.

Vorteilhaft sind die optischen Elemente der Lichtquellenanordnung eine Bifokallinse. Diese Ausbildung entspricht dem Zweck, einerseits relativ entfernte Reflektoren festzustellen und andererseits relativ nahe Reflektoren festzustellen. Im ersten Fall ist wesentlich, dass der auf dem weit entfernten Reflektor erzeugte Lichtfleck eine genügende Lichtstärke aufweist, um vom Fotodetektor festgestellt werden zu können. Im zweiten Fall ist vor allem wesentlich, dass der Lichtfleck in einem Bereich erzeugt wird, wo er vom Fotodetektor auch festgestellt werden kann. Da sich in diesem Fall der Gegenstand nahe bei der Lichtquellenanordnung und beim Fotodetektor befindet, genügt ein kleiner Teil der von der Lichtquellenanordnung erzeugten Lichtenergie, um einen Lichtfleck von genügender Intensität zu erzeugen. Es kann somit der grösste Teil der Bifokallinse zur Erzeugung des Lichtflecks auf dem entfernten Gegenstand dienen.

Eine zweckmässige Ausführungsform der Lichtschranke ist dadurch gekennzeichnet, dass die Linse mindestens eine sphärische Fläche und eine Prismenfläche aufweist. Die sphärische Fläche dient dabei in bekannter Weise zur Erzeugung eines Lichtbündels entlang der optischen Achse der Lichtquellenanordnung, die man hier als Hauptachse bezeichnen könnte. Demgegenüber dient die Prismenfläche dazu, etwas Licht in einem spitzen Winkel zur optischen Achse des Fotodetektors abzulenken. Wenn es auch möglich wäre, anstelle einer Prismenfläche eine weitere sphärische Fläche zu verwenden, erweist sich jedoch die Prismenfläche einfacher in der Herstellung und dem Zweck durchaus entsprechend, denn es geht lediglich darum, auf einem nahen Reflektor einen Lichtfleck zu erzeugen, der vom Fotodetektor sicher wahrnehmbar ist. Sobald sich dieser Gegenstand etwas weiter von der Reflexlichtschranke entfernt befindet, kann der Fotodetektor den von dem sich entlang der Hauptachse verlaufenden Bündel erzeugten Lichtfleck erfassen, so dass es belanglos ist, dass das vom Prisma abgelenkte Licht stark divergiert und nicht mehr ausreicht, um einen genügend starken Lichtfleck auf dem entfernten Reflektor zu erzeugen.

Zweckmässigerweise ist die Prismenfläche auf der der sphärischen Fläche entgegengesetzten Seite der Linse angeordnet. Dies erleichtert die Fertigung der Linse.

Die Linse der Lichtquellenanordnung und die Linse des Fotodetektors können aus einem Stück bestehen. Dies erlaubt eine besonders billige Fertigung aus Kunststoff, z. B. durch Spritzen.

Von besonderem Vorteil ist auch, wenn beide Linsen, nämlich die der Lichtquellenanordnung und die des Fotodetektors, gleich ausgebildet sind. Es spielt dann keine Rolle, wie bei der Montage der Lichtschranke das Teil in das Gehäuse eingelegt wird.

Es ist zweckmässig, wenn jede Linse eine Kugelfläche aufweist, und das Prisma zwischen den Kugelflächen ausgebildet ist. Werkzeuge zur Herstellung von Kunststofflinsen mit Kugelflächen sind relativ einfach herstellbar und die Anordnung des Prismas zwischen den Kugelflächen ergibt eine symmetrische Ausbildung.

Die Herstellung des Werkzeuges wird noch weiter vereinfacht, wenn das Prisma auf der den Kugelflächen entgegengesetzten Seite angeformt ist.

Ein Ausführungsbeispiel wird nun unter Bezugnahme auf die Zeichnung beschrieben. Es zeigt:

Fig. 1 die Wirkungsweise einer bekannten Lichtschranke,

Fig. 2 eine Seitenansicht der Lichtschranke von Fig. 1, wobei der Querschnitt des zurückgeworfenen Lichtbündels bei entferntem und nahem Reflektor ersichtlich ist,

Fig. 3 eine Lichtschranke gemäss einem Ausführungsbeispiel der Erfindung, wobei aber der Strahlengang entlang der Hauptachse der Lichtquellenanordnung nicht eingezeichnet ist, weil er jenem in Fig. 1 entspricht, und

Fig. 4 eine Seitenansicht der Reflexlichtschranke von Fig. 3.

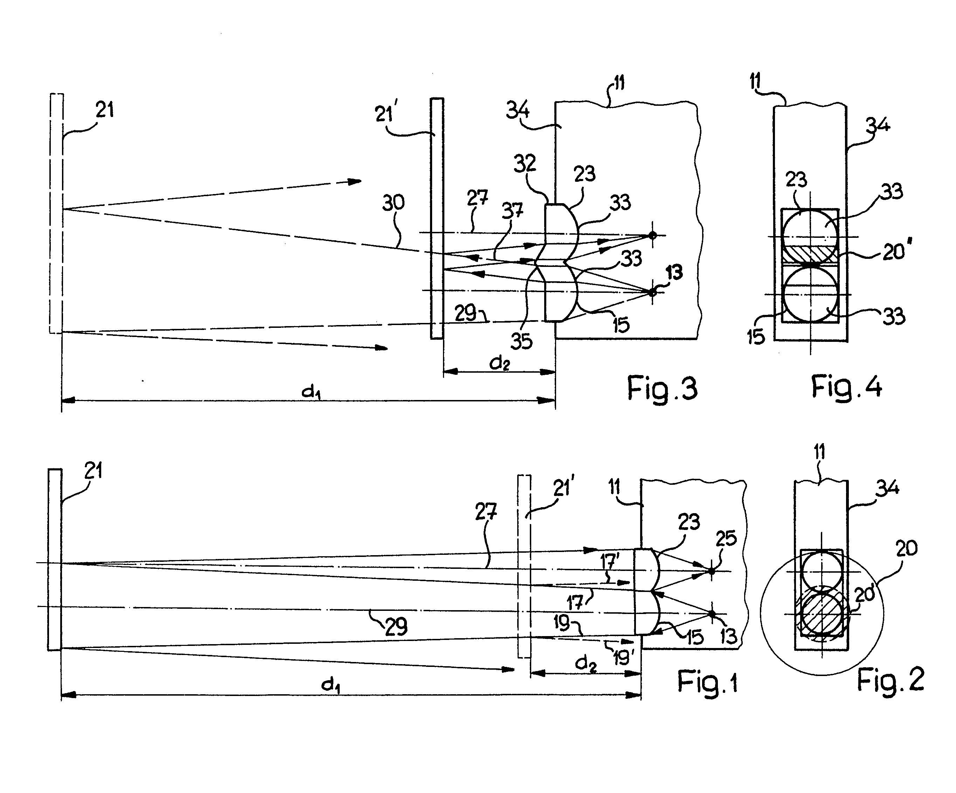

Die bekannte Reflexlichtschranke gemäss den Figuren 1 und 2 besteht im wesentlichen aus dem Gehäuse 11, in welchem der Lichtsender und Lichtempfänger untergebracht sind. Die Lichtquellenanordnung besteht aus einer Lichtquelle 13 und einer Linse 15, welche das von der Lichtquelle 13, z.B. einer lichtemittierenden Diode, ausgestrahlte Licht bündelt, wie dies durch die Strahlen 17 und 19 angedeutet ist. Es wird daher auf einem festzustellenden Reflektor 21 ein Lichtfleck erzeugt, der durch den Fotodetektor festgestellt werden kann. Der Fotodetektor besteht aus der Linse 23 und dem Fotoelement 25. Aus der Zeichnung ist ersichtlich, dass die optische Achse 27 des Fotodetektors praktisch parallel zur optischen Achse 29 der Lichtquellenanordnung angeordnet ist. Dies bringt insofern Probleme, als die Lichtschranke den Reflektor 21' im Abstand $d_2$, also im Nahbereich nicht mehr feststellen kann, weil kein oder zu wenig reflektiertes Licht auf die Linse 23 fällt, wie dies durch die gestrichelten Linien 17' und 19' bzw. in Fig. 2 durch die Kreisfläche 20' angedeutet ist. Demgegenüber kann die Lichtschranke einen Reflektor im Abstand $d_1$, also im Fernbereich, ohne weiteres erkennen, weil das reflektierte Licht auf die Linse 23 fällt, wie dies durch die Kreisfläche 20 angedeutet ist. Aus diesem Grunde werden bekannte Lichtschranken mit verschiedenen Linsen 15 ausgerüstet, je nachdem ob sie der Feststellung von Gegenständen im Fernbereich oder Nahbereich dienen sollen. Zur Feststellung von Reflektoren im Nahbereich muss die Linse 15 mehr streuen, d.h. die Strahlen 17 und 19 müssen mehr divergieren.

Die erfindungsgemässe Reflexlichtschranke gemäss den Figuren 3 und 4 eignet sich zur Feststellung von Reflektoren sowohl im Fernbereich als auch im Nahbereich. Im Fernbereich wirkt die Lichtschranke grundsätzlich gleich wie in Figur 1 gezeigt. Es genügt daher, wenn in den Figuren 3 und 4 die Wirkungsweise im Nahbereich dargestellt wird. Dies wird nun näher erläutert.

Die Linsen 15 und 23 für die Lichtquellenanordnung und den Fotodetektor sind vorteilhaft aus einem Stück durchsichtigem Kunststoff gefertigt. Das so gebildete Teil ist aber derart ausgebildet, dass von Lichtquelle 13 Licht entlang mindestens zweier divergierender optischer Achsen 29, 30 ausgestrahlt wird, wobei die eine Achse 29 praktisch parallel zur optischen Achse 27 des Fotodetektors und die andere Achse 20 in einem spitzen Winkel zur optischen Achse 27 des Fotodetektors verläuft. Dabei genügt es, wenn entlang der Achse 30 weniger Licht als entlang der Achse 29 ausgestrahlt wird, denn viel Licht ist lediglich für den Fernbereich, also zur Feststellung des in Figur 3 gestrichelt dargestellten Gegenstandes 21 notwendig. Die Linse 15 besitzt eine sphärische Fläche 33. Des weiteren ist ein Prisma 35 auf der entgegengesetzten Seite der sphärischen Fläche angeordnet und zwar benachbart zur sphärischen Fläche 33. Dadurch wird bewirkt, dass auch Licht, wie mit dem Strahl 37 angedeutet, auf den Reflektor 21' geworfen wird. Dadurch wird auf diesem Reflektor 21' ein Lichtfleck erzeugt, der vom Fotodetektor auch dann empfangen wird, wenn sich der Reflektor 21' nahe bei der Reflexlichtschranke befindet. Die Wirkung dieser Ausgestaltung der Linse 33 entspricht grob gesehen jener einer Bifokallinse. Es wäre auch möglich, statt des Prismas 35 eine weitere sphärische Fläche zu verwenden. Die Herstellung des Prismas 35 ist jedoch einfacher zu realisieren. Es können auch beide Linsen 15 und 23 gleich ausgebildet sein. So kann jede Linse eine Kugelfläche 33 aufweisen und das Prisma 35 kann zwischen den Kugelflächen ausgebildet sein, um so ein Teil zu bilden, das symmetrisch ist. Es ist dann gleichgültig, wie das Teil 32 in das Gehäuse 34 der Lichtschranke 11 eingesetzt wird.

In Figur 4 ist schraffiert eine Fläche 20" angedeutet, welche den Querschnitt des vom Prisma erzeugten und vom Reflektor 21' reflektierten Lichtbündels anzeigt.

## Patentansprüche

1. Reflexlichtschranke mit einer Lichtquellenanordnung (13) und optischen Elementen (15, 33, 35) zur Erzeugung zweier entlang getrennter optischer Achsen (29, 30) gerichteter Strahlenbündel, sowie mit einem Fotodetektor zum Empfang von an einem reflektierenden Gegenstand (21) zurückgeworfenem Licht, wobei die Achse des einen Strahlenbündels im wesentlichen parallel zur Empfangsrichtung (27) des Fotodetektors verläuft, dadurch gekennzeichnet, dass die optischen Elemente (15, 33, 35) so ausgebildet und angeordnet sind, dass die Achse (30) des anderen Strahlenbündels mit der des einen Strahlenbündels (29) einen spitzen Winkel einschliesst.

2. Reflexlichtschranke nach Anspruch 1, dadurch gekennzeichnet, dass die optischen Elemente (15) der Lichtquellenanordnung eine Bifokallinse sind.

3. Reflexlichtschranke nach Anspruch 2, dadurch gekennzeichnet, dass die Linse (15) mindestens eine sphärische Fläche und eine Prismenfläche (35) aufweist.

4. Reflexlichtschranke nach Anspruch 3, dadurch gekennzeichnet, dass die Prismenfläche (35) auf der der sphärischen Fläche entgegengesetzten Seite der Linse (15) angeordnet ist.

5. Reflexlichtschranke nach einem der Ansprüche 1 bis 4, dadurch gekennzeichnet, dass die Linse (15) der Lichtquellenanordnung und die Linse (23) des Fotodetektors aus einem Stück bestehen.

6. Reflexlichtschranke nach Anspruch 5, dadurch gekennzeichnet, dass beide Linsen (15, 23) gleich ausgebildet sind.

7. Reflexlichtschranke nach Anspruch 6, dadurch gekennzeichnet, dass jede Linse (15, 23) eine Kugelfläche aufweist und dass das Prisma (35) zwischen den Kugelflächen ausgebildet ist.

8. Reflexlichtschranke nach Anspruch 6, dadurch gekennzeichnet, dass das Prisma (35) auf der den Kugelflächen entgegengesetzten Seite angeformt ist.

## Claims

1. Reflexion light barrier comprising a light source assembly (13) and optical elements (15, 33, 35) to generate two light beams directed along separate optical axes (29, 30), and a photodetector to receive light reflected by a reflecting object, the axis of one light beam extending substantially parallel to the direction of reception (27) of the photodetector, characterized in that the optical elements (15, 33, 35) are designed and located in such way that the axis (30) of the other light beam is at an acute angle to the axis of the first light beam (29).

2. Reflexion light barrier as claimed in claim 1, characterized in that the optical elements (15) of the light source assembly consist of a bifocal lens.

3. Reflexion light barrier as claimed in claim 2, characterized in that the lens (15) has at least one spherical surface and one prismatic surface (35).

4. Reflexion light barrier as claimed in claim 3, characterized in that on the lens (15) the prismatic surface (35) is located on the side which is opposite to spheric surface.

5. Reflexion light barrier in one of the claims 1 to 4, characterized in that the lens (15) of the light source assembly and the lens (23) of the photodetector consist of one piece.

6. Reflexion light barrier as claimed in claim 5, characterized in that both lenses (15, 23) are identical.

7. Reflexion light barrier as claimed in claim 6, characterized in that each lens (15, 23) has a spherical surface and in that the prism (35) is located between the spherical surface.

8. Reflexion light barrier as claimed in claim 6, characterized in that the prism (35) is located on the side opposite to the spherical surfaces.

## Revendications

1. Barrière photo-électrique à réflexion, comprenant une source de lumière (13) et des éléments optiques (15, 33, 35) pour engendrer deux faisceaux de rayonnements orientés le long d'axes optiques séparés (29, 30), ainsi qu'un photodétecteur pour recevoir une lumière renvoyée par un objet réfléchissant (21), l'axe de l'un des faisceaux de rayonnements s'étendant sensiblement parallèlement à la direction de réception (27) du photodétecteur, caractérisée par le fait que les éléments optiques (15, 33, 35) sont réalisés et agencés de telle sorte que l'axe (30) de l'autre faisceau de rayonnements délimite un angle aigu avec celui (29) du premier faisceau de rayonnements.

2. Barrière photo-électrique à réflexion selon la revendication 1, caractérisée par le fait que les éléments optiques (15) de la source de lumière consistent en une lentille bifocale.

3. Barrière photo-électrique à réflexion selon la revendication 2, caractérisée par le fait que la lentille (15) présente au moins une surface sphérique et une surface prismatique (35).

4. Barrière photo-électrique à réflexion selon la revendication 3, caractérisée par le fait que la surface prismatique (35) se trouve du côté de la lentille (15) tourné à l'opposé de la surface sphérique.

5. Barrière photo-électrique à réflexion selon l'une des revendications 1 à 4, caractérisée par le fait que la lentille (15) de la source de lumière et la lentille (23) du photodétecteur constituent une seule pièce

6. Barrière photo-électrique à réflexion selon la revendication 5, caractérisée par le fait que les deux lentilles (15, 23) sont de réalisations indentiques.

7. Barrière photo-électrique à réflexion selon la revendication 6, caractérisée par le fait que chaque lentille (15, 23) présente une surface sphérique; et par le fait que le prisme (35) est réalisé entre les surfaces sphériques.

8. Barrière photo-électrique à réflexion selon la revendication 6, caractérisée par le fait que le prisme (35) est formé sur le côté tourné à l'opposé des surfaces sphériques.

7

Fig.3

Fig.4

Fig.1

Fig.2

0083431